# EUROPÄISCHE PATENTSCHRIFT

(11) **EP 3 846 921 B1**
(45) Veröffentlichungstag und Bekanntmachung des Hinweises auf die Patenterteilung: **01.05.2024**
(21) Anmeldenummer: 19768713.0
(22) Anmeldetag: 20.08.2019
(51) Int. Cl.: B01D 53/04

(54) **VERFAHREN ZUM BETREIBEN EINER TEMPERATURWECHSELADSORPTIONSANLAGE UND TEMPERATURWECHSELADSORPTIONSANLAGE**
METHOD FOR OPERATING A TEMPERATURE SWING ADSORPTION PLANT AND TEMPERATURE SWING ADSORPTION PLANT
PROCÉDÉ D'EXPLOITATION D'UNE INSTALLATION D'ADSORPTION À TEMPÉRATURE ALTERNÉE ET INSTALLATION D'ADSORPTION À TEMPÉRATURE ALTERNÉE

(30) Priorität: 03.09.2018 DE 102018006960
(43) Veröffentlichungstag der Anmeldung: 14.07.2021
(73) Patentinhaber: Linde GmbH, 82049 Pullach (DE)
(72) Erfinder: RIED, Thomas, 80797 München (DE); SALAZAR DUARTE, Gabriel, 80336 München (DE)
(74) Vertreter: Lu, Jing
(86) Internationale Anmeldenummer: PCT/EP2019/025274
(87) Internationale Veröffentlichungsnummer: WO 2020/048633

(56) Entgegenhaltungen:
- WO-A1-2017/220195
- US-A1- 2003 037 672
- US-A1- 2010 058 804

## Beschreibung

Die Erfindung betrifft ein Verfahren zur Trennung eines Gasgemischstroms mittels Temperaturwechseladsorption und eine zur Durchführung eines derartigen Verfahrens eingerichtete Temperaturwechseladsorptionsanlage gemäß den jeweiligen Oberbegriffen der unabhängigen Patentansprüche.

### Stand der Technik

Bei der Temperaturwechseladsorption (TSA, Temperature Swing Adsorption) handelt es sich um ein adsorptives Verfahren zur Trennung von Gasgemischen, bei dem die Regenerierung des verwendeten Adsorbens unter Einsatz von thermischer Energie erfolgt. Die Temperaturwechseladsorption wird beispielsweise zur Abgasreinigung oder zur Aufbereitung von Gasgemischen wie Erd- oder Synthesegas verwendet. Auch andere Gasgemische können mittels Temperaturwechseladsorption in entsprechender Weise getrennt werden, beispielsweise Gasgemische wie Biogas oder Abgase aus chemischen oder physikalischen Gaswäscheverfahren wie der Rectisol- oder Aminwäsche, sofern sie sich in ihrer Zusammensetzung für eine entsprechende Trennung eignen. Die vorliegende Erfindung ist nicht auf die Verwendung bestimmter Adsorbentien bzw. Gasgemische beschränkt.

Die Temperaturwechseladsorption macht sich die Temperaturabhängigkeit von Adsorptionsvorgängen zunutze. Ein Adsorbens, das in einem geeigneten Adsorberbehälter (hier als "Adsorptionseinheit" bezeichnet) untergebracht ist, wird dabei in einem Betriebstakt auf einem niedrigeren Temperaturniveau mit dem zu trennenden Gasgemischstrom durchströmt und hierbei mit der oder den jeweils abzutrennenden Komponenten aus dem Gasgemischstrom beladen. Dieser Betriebstakt wird nachfolgend auch als "Adsorptionstakt" bezeichnet. In einem nachfolgenden Betriebstakt kann das Adsorbens dann durch Erwärmen, d.h. Einbringen thermischer Energie, von dieser oder diesen Komponenten weitgehend befreit und auf diese Weise "regeneriert" werden. Dieser Betriebstakt wird nachfolgend auch als "Regeneriertakt" bezeichnet. Für den kontinuierlichen Betrieb einer Temperaturwechseladsorptionsanlage sind daher mindestens zwei Adsorptionseinheiten erforderlich, damit stets eine der Adsorptionseinheiten mit dem zu trennenden Gasgemischstrom durchströmt und damit zur Trennung des Gasgemischstroms verwendet werden kann.

Die Temperaturwechseladsorption kann insbesondere in Stoffsystemen mit Komponenten eingesetzt werden, die hohe Adsorptionsenthalpien aufweisen. Die Taktzeiten der erläuterten Betriebstakte betragen in der Regel mehrere Stunden. Die Temperaturwechseladsorption wird generell zur Entfernung niedrig konzentrierter Komponenten in Gasgemischen eingesetzt und eignet sich typischerweise weniger zur Entfernung höher konzentrierter Komponenten.

In klassischen Anlagen zur Temperaturwechseladsorption wird in dem Regeneriertakt ein sogenanntes Regeneriergas in erwärmter Form direkt über das Adsorbens geleitet. Das Regeneriergas nimmt dabei die zuvor adsorbierten und nun aufgrund der Temperaturerhöhung desorbierenden Komponenten auf. Bei dem Regeneriergas kann es sich beispielsweise um ein gereinigtes Verfahrensprodukt, Wasserdampf oder Stickstoff handeln. Auch die Verwendung anderer Regeneriergase ist möglich.

Alternativ zur Verwendung eines Regeneriergases, das in direkten Kontakt mit dem Adsorbens kommt, kann in dem Regeneriertakt auch eine indirekte Beheizung des Adsorbens zu dessen Regeneration vorgenommen werden. Hierzu kann ebenfalls ein erwärmter Fluidstrom eingesetzt werden, der jedoch beispielsweise mittels Heizleitungen durch das Adsorbens bzw. ein Adsorberbett geführt wird. Ein entsprechendes Fluid wird hier auch als "Wärmeträgerfluid" bezeichnet. Ein Wärmeträgerfluid ist im hier verwendeten Sprachgebrauch also eine Flüssigkeit oder ein Gas, das beim indirekten Heizen und/oder Kühlen eines Adsorbers durch einen getrennten Strömungskanal geführt wird und auf diese Weise einem indirekten Wärmetausch mit dem Adsorbens unterworfen wird. Als Wärmeträgerfluid in Temperaturwechseladsorptionsanlagen kann beispielsweise Wasser, Thermalöl, Dampf oder heißer Stickstoff verwendet werden.

Nach dem Regeneriertakt ist eine entsprechende Adsorptionseinheit bei Verwendung eines Regeneriergases noch mit Regeneriergas und einem Teil desorbierten Komponenten gefüllt. Bei indirekter Beheizung findet sich in der Adsorptionseinheit ebenfalls zumindest noch ein Teil der desorbierten Komponenten. Es folgt daher jeweils ein Spültakt, in dem die Adsorptionseinheit mit einem sogenannten Spülgas freigespült wird. Hierbei geht der jeweilige Inhalt der Adsorptionseinheiten, falls keine weiteren Maßnahmen ergriffen werden, typischerweise verloren. Nach einem entsprechenden Spültakt folgt ein Abkühltakt.

Die vorliegende Erfindung stellt sich die Aufgabe, entsprechende Verluste beim Spülen einer Adsorptionseinheit nach Möglichkeit zu vermeiden.

### Offenbarung der Erfindung

Vor diesem Hintergrund schlägt die vorliegende Erfindung ein Verfahren zur Trennung eines Gasgemischstroms mittels Temperaturwechseladsorption und eine zur Durchführung eines derartigen Verfahrens eingerichtete Temperaturwechseladsorptionsanlage mit den Merkmalen der unabhängigen Patentansprüche vor. Bevorzugte Ausgestaltungen sind Gegenstand der abhängigen Patentansprüche sowie der nachfolgenden Beschreibung.

Vor der Erläuterung der Merkmale und Vorteile der vorliegenden Erfindung werden noch einige Grundlagen und die verwendeten Begriffe erläutert.

Komponentengemische können im hier verwendeten Sprachgebrauch angereichert oder abgereichert an einer oder mehreren Komponenten sein, wobei sich diese Begriffe auf einen entsprechenden Gehalt in einem anderen Komponentengemisch beziehen, unter Verwendung dessen das betrachtete Komponentengemisch gebildet wurde. Ein Komponentengemisch ist dabei gemäß dem hier verwendeten Sprachgebrauch "angereichert", wenn es zumindest den 10-fachen, 100-fachen oder 1 .000-fachen Gehalt der bezeichneten Komponente(n) aufweist, und es ist "abgereichert", wenn es höchstens den 0,1-fachen, 0,01-fachen oder 0,001-fachen Gehalt der bezeichneten Komponente(n) aufweist.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, deren Maximal- und Minimalwerte sich um beispielsweise nicht mehr als 1%, 5%, 10%, 20% oder sogar 50% unterscheiden.

Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste ein. Entsprechendes gilt für Temperaturniveaus.

### Vorteile der Erfindung

Im Rahmen der vorliegenden Erfindung wird insgesamt ein Verfahren zum Betreiben einer Temperaturwechseladsorptionsanlage mit drei Adsorptionseinheiten vorgeschlagen. Die Adsorptionseinheiten sind jeweils zumindest teilweise mit Adsorbens, beispielsweise in Form von Granulen oder Formkörpern, gefüllt. Ist nachfolgend vereinfacht von "drei" Adsorptionseinheiten die Rede, versteht sich, dass in einer erfindungsgemäßen Anlage bzw. einem entsprechenden Verfahren auch mehr als drei Adsorptionseinheiten vorhanden sein bzw. eingesetzt werden können, ohne dass dies explizit angegeben ist.

Die im Rahmen der vorliegenden Erfindung verwendeten drei Adsorptionseinheiten werden in einem zeitlichen Versatz zueinander jeweils in einem Adsorptionstakt, danach in einem Zusatztakt, danach in einem Regeneriertakt, danach in einem Spültakt und danach in einem Abkühltakt betrieben. Mit anderen Worten folgen der Adsorptionstakt, der Zusatztakt, der Regeneriertakt, der Spültakt und der Abkühltakt in der angegebenen Reihenfolge aufeinander, wobei die angegebenen Takte nur in der angegebenen Reihenfolge verwendet werden, zwischen diese Takte jedoch andere Betriebstakte zwischengeschaltet werden können.

Wie insoweit im Temperaturwechseladsorptionsverfahren bekannt, wird in dem Adsorptionstakt jeweils ein erstes Gasgemisch auf einem ersten Temperaturniveau über ein Adsorbens in den Adsorptionseinheiten geführt und Komponenten des ersten Gasgemischs werden von dem Adsorbens adsorbiert. Dabei wird ein an den am Adsorbens adsorbierenden Komponenten abgereichertes Gasgemischs (nachfolgend als "zweites" Gasgemisch bezeichnet) erhalten. Bei den am Adsorbens adsorbierenden Komponenten kann es sich um von Produktkomponenten abzutrennende, störende Komponenten aus einem entsprechenden ersten Gasgemisch handeln, wobei das zweite Gasgemisch ein Produktgemisch darstellt. Es kann sich jedoch auch um solche Komponenten handeln, die ihrerseits in ein Produktgemisch überführt werden sollen. Es versteht sich, dass im Rahmen der vorliegenden Erfindung nicht notwendigerweise die gesamten in dem ersten Gasgemisch enthaltenen Komponenten von dem Adsorbens adsorbiert werden müssen. Der adsorbierte Anteil hiervon richtet sich insbesondere nach den jeweiligen Adsorptionseigenschaften und dem verwendeten Adsorbens sowie den vorherrschenden weiteren Betriebsbedingungen.

In dem Regeneriertakt werden die Adsorptionseinheiten (wie nachfolgend erläutert in direkter oder indirekter Weise) auf ein zweites Temperaturniveau oberhalb des ersten Temperaturniveaus erwärmt und die in dem Adsorptionsmodus von dem Adsorbens adsorbierten Komponenten werden zumindest teilweise von diesem desorbiert. Auch hier versteht sich, dass nicht sämtliche der zuvor adsorbierten Komponenten wieder desorbiert werden müssen; eine möglichst weitgehende Desorption ist jedoch wünschenswert, um das Adsorbens möglichst vollständig zu regenerieren. Die desorbierten Komponenten können während des gesamten Regeneriertakts oder in einem sich anschließenden Entleerungstakt aus den entsprechenden Adsorptionseinheiten ausgeführt werden. In sämtlichen Fällen verbleibt jedoch in den entsprechend regenerierten Adsorptionseinheiten ein gewisser Anteil der desorbierten Komponenten in der Gasphase.

Daher werden in einem sich an den Regeneriertakt anschließenden Spültakt die in dem Regeneriertakt desorbierten und nach dem Regeneriertakt in den Adsorptionseinheiten vorhandenen (verbliebenen) Komponenten zumindest teilweise mittels eines Spülgases (nachfolgend als "drittes" Gasgemisch bezeichnet) unter Erhalt eines beladenen Spülgases (nachfolgend als "viertes" Gasgemisch bezeichnet) ausgespült. Bei dem vierten Gasgemisch handelt es sich um ein Fluid, das die desorbierten Komponenten und die Komponenten des dritten Gasgemischs enthält. Insbesondere dann, wenn es sich bei den desorbierten Komponenten um die Zielprodukte eines entsprechenden Verfahrens handelt, ist ein Verwerfen des vierten Gasgemischs, wie es herkömmlicherweise erfolgen kann, nachteilig.

In dem Abkühltakt werden schließlich die Adsorptionseinheiten von dem zweiten oder jedenfalls von einem höheren Temperaturniveau abgekühlt, und zwar insbesondere zumindest teilweise auf das erste Temperaturniveau. Unter einer "zumindest teilweisen" Abkühlung wird dabei insbesondere eine Abkühlung auf das erste Temperaturniveau oder auf ein Temperaturniveau zwischen dem ersten und dem zweiten Temperaturniveau verstanden.

Daher schlägt die vorliegende Erfindung sich periodisch wiederholende erste Betriebszeiträume vor, die jeweils mit zweiten Betriebszeiträumen alternieren. Auch hier können weitere Betriebszeiträume zwischengeschaltet sein. In den periodisch wiederholten ersten Betriebszeiträumen wird jeweils zeitgleich eine der Adsorptionseinheiten in dem Adsorptionstakt, eine der Adsorptionseinheiten in dem Spültakt und eine der Adsorptionseinheiten in dem Zusatztakt betrieben. Es versteht sich, dass es sich bei den aufeinander folgenden ersten Betriebszeiträume dabei jeweils andere der Adsorptionseinheiten in dem Adsorptionstakt, in dem Spültakt und in dem Zusatztakt betrieben werden, wie nachfolgend noch im Detail erläutert.

Erfindungsgemäß ist ferner vorgesehen, dass während der ersten Betriebszeiträume ein Teil des zweiten Gasgemischs der in dem Spültakt betriebenen Adsorptionseinheit als das dritte Gasgemisch oder als ein Teil des dritten Gasgemischs zugeführt wird, und dass das vierte Gasgemisch oder ein Teil des vierten Gasgemischs der in dem Zusatztakt betriebenen Adsorptionseinheit zugeführt wird. Die in dem dritten Gasgemisch enthaltenen, in dem Regeneriertakt von dem Adsorbens desorbierten Komponenten können auf diese Weise in der in dem Zusatztakt betriebenen Adsorptionseinheit in besonders vorteilhafter Weise zurückgewonnen werden.

Die Besonderheit des erfindungsgemäß vorgeschlagenen Verfahrens besteht in einem Recycleschritt, wie er soeben erläutert wurde. Bei diesem wird, wie bereits erläutert, ein Teil des zweiten Gasgemischs als das oder als ein Teil des dritten Gasgemischs zum Spülen der jeweils nach dem Regeneriertakt zu spülenden Adsorptionseinheit verwendet und der austretende Gasstrom, das vierte Gasgemisch, wird wieder einer Adsorption zugeführt, und zwar in der in dem Zusatztakt betriebenen Adsorptionseinheit. Das austretende Gas aus der gespülten Adsorptionseinheit, also das vierte Gasgemisch, enthält dabei eine höhere Konzentration der jeweils abzutrennenden Komponenten (bzw. weist einen höheren Partialdruck dieser Komponenten auf). Auf diese Weise kann die Beladung des Adsorbens gesteigert werden. Durch genau diese Prozessführung kann im Rahmen der vorliegenden Erfindung das Adsorbens besser ausgenutzt und ein Großteil des zum Spülen verwendeten Produkts zurückgewonnen werden. Die zum Spülen abgezogene Gasmenge kann auf diese Weise nahezu vollständig kompensiert werden.

Im Rahmen der vorliegenden Erfindung können ferner geringere Produktflussschwankungen als bei herkömmlichen Verfahren mit drei Adsorptionseinheiten ohne eine entsprechende Rückführung erzielt werden. Insgesamt kann im Rahmen der vorliegenden Erfindung insbesondere die Ausbeute der jeweiligen Zielkomponente deutlich gesteigert werden.

Zur Kompensation des Druckabfalls über den entsprechend in dem Zusatztakt oder den anderen erwähnten Takten betriebenen Adsorbern kann beispielsweise ein Gebläse eingesetzt werden.

Zur Verdeutlichung des Betriebs der in dem Zusatztakt betriebenen Adsorptionseinheiten kann festgestellt werden, dass hier das vierte Gasgemisch zumindest teilweise auf dem ersten Temperaturniveau über ein Adsorbens in den Adsorptionseinheiten geführt wird, wobei Komponenten des vierten Gasgemischs von dem Adsorbens adsorbiert werden. Ein dabei erhaltenes fünftes Gasgemisch zumindest teilweise dem zweiten Gasgemisch zugespeist wird. Das fünfte Gasgemisch ist dabei abgereichert an den jeweils von dem Adsorbens adsorbierenden Komponenten, wobei diese Anreicherung in dem fünften Gasgemisch im Vergleich zum vierten Gasgemisch aufgrund des höheren Partialdrucks erhöht ist.

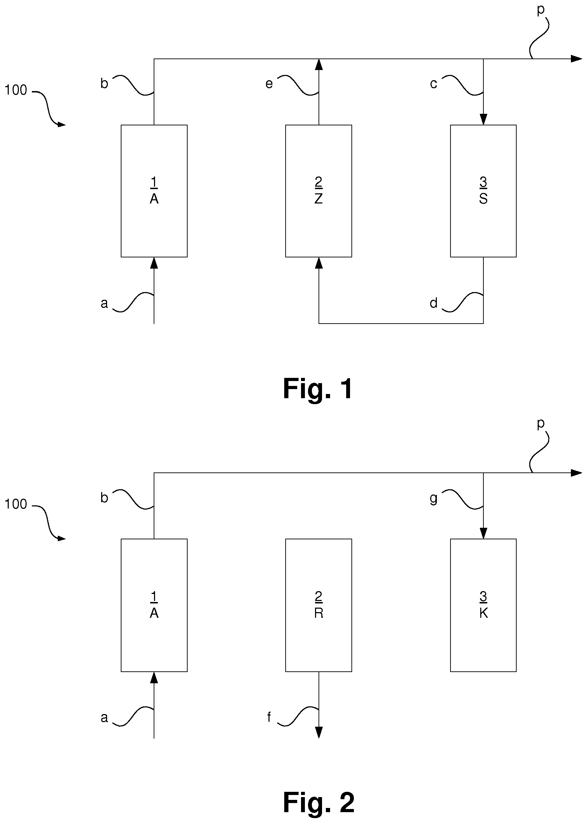

Im Rahmen der vorliegenden Erfindung werden in den erwähnten zweiten Betriebszeiträumen, die mit den zuvor erläuterten ersten Betriebszeiträumen alternieren, zeitgleich jeweils eine der Adsorptionseinheiten in dem Adsorptionstakt, eine der Adsorptionseinheiten in dem Regeneriertakt und eine der Adsorptionseinheiten in dem Abkühltakt betrieben. Die zuvor erläuterten ersten und zweiten Betriebszeiträume werden nachfolgend insbesondere unter Bezugnahme auf die Figuren 1 und 2 näher erläutert.

Auch zur Abkühlung in den zweiten Betriebszeiträumen kann ein Teil des zweiten Gasgemischs, das in dem Adsorptionstakt erhalten wird, verwendet werden. Dieses kann hierzu in eine entsprechende Adsorptionseinheit eingeleitet werden. Auf diese Weise kann der Druck in einer entsprechenden Adsorptionseinheit aufrechterhalten werden. Ohne diese Maßnahme könnte der Druck abfallen, was sich negativ auf die Leistungsfähigkeit in dem sich anschließenden Adsorptionsschritt auswirken könnte.

Wie bereits erwähnt, wechseln die jeweils in den genannten Takten betriebenen Adsorptionseinheiten in dem ersten mit jeder Instanz ab. Im Rahmen der vorliegenden Erfindung wird dabei in den ersten Betriebszeiträumen jeweils jene Adsorptionseinheit im Adsorptionstakt betrieben, die in einem zeitlich vorangehenden ersten Betriebszeitraum in dem Spültakt betrieben wurde, jene Adsorptionseinheit wird in dem Zusatztakt betrieben, die in dem zeitlich vorangehenden ersten Betriebsmodus in dem Adsorptionstakt betrieben wurde, und jene Adsorptionseinheit wird in dem Spültakt betrieben, die in dem zeitlich vorangehenden ersten Betriebszeitraum in dem Zusatztakt betrieben wurde. Ein "zeitlich vorangehender" erster Betriebszeitraum bezeichnet dabei den jeweils zurückliegenden ersten Betriebszeitraum, wobei zwischen diesem zeitlich vorangehenden und dem jeweils betrachteten ersten Betriebszeitraum kein weiterer erster Betriebszeitraum liegt.

Ferner wird im Rahmen der vorliegenden Erfindung in den zweiten Betriebszeiträumen jeweils jene Adsorptionseinheit in dem Adsorptionstakt betrieben, die in einem zeitlich vorangehenden zweiten Betriebszeitraum in dem Abkühltakt betrieben wurde, jene Adsorptionseinheit wird in dem Regeneriertakt betrieben wird, die in dem zeitlich vorangehenden zweiten Betriebszeitraum in dem Adsorptionstakt betrieben wurde, jene Adsorptionseinheit wird in dem Abkühltakt betrieben wird, die in dem zeitlich vorangehenden zweiten Betriebszeitraum in dem Regeneriertakt betrieben wurde. Für die "zeitlich vorangehenden" zweiten Betriebszeiträume gilt das oben für die "zeitlich vorangehenden" ersten Betriebszeiträume gesagte.

Im Rahmen der vorliegenden Erfindung kann eine direkte Erwärmung in dem Regeneriertakt erfolgen, indem ein Fluid durch die in dem Regeneriertakt betriebene Adsorptionseinheit geführt wird, welches mit dem Adsorbens in der Adsorptionseinheit in stofflichen Kontakt kommt. Mittels eines entsprechenden Fluids können entsprechende desorbierende Komponenten direkt abgeführt werden.

Im Rahmen der vorliegenden Erfindung kann jedoch auch eine indirekte Temperierung in dem Regeneriertakt zum Einsatz kommen, d.h. die Energie zu- bzw. -abfuhr erfolgt über ein Thermalfluid, das nicht mit dem Adsorbens in der Adsorptionseinheit in Kontakt kommt, sondern von diesem durch eine stoffundurchlässige Barriere getrennt ist. In einem entsprechend indirekt beheizten Regenerationstakt wird lediglich das freiwerdende Gas durch die Desorption und durch die Volumenexpansion abgeführt, so dass der Druck in einer entsprechenden Adsorptionseinheit im Wesentlichen konstant bleibt. Insbesondere in einem derartigen Fall ist aufgrund der relativ hohen Gehalte an desorbierten Komponenten nach einem entsprechenden Adsorptionstakt eine Spülung erforderlich. Diese erweist sich im Rahmen der vorliegenden Erfindung als besonders effektiv. Es ist auch möglich, anstelle oder zusätzlich zu den erläuterten Arten der Beheizung eine elektrische Beheizung vorzunehmen.

Im Rahmen der vorliegenden Erfindung kann der Regeneriertakt auch unterteilt werden und ein aus der in dem Regeneriertakt betriebenen Adsorptionseinheit entnommenes Gasgemisch kann teilweise der in dem Zusatztakt betriebenen Adsorptionseinheit zugeführt werden. Dies kann insbesondere dann der Fall sein, wenn der überwiegende Anteil dieser Komponenten bereits desorbiert ist und ein entsprechendes Restgas keinen effektiv nutzbaren Anteil dieser Komponenten mehr aufweist.

Wie bereits erläutert, kann im Rahmen der vorliegenden Erfindung das zweite Gasgemisch der Anlage als Produktgasgemisch entnommen werden oder die in dem Regeneriertakt zumindest teilweise die adsorbierten Komponenten können in ein entsprechendes Produktgasgemisch überführt werden. Mit anderen Worten kann im Rahmen der vorliegenden Erfindung also die jeweilige Zielkomponente die schwächer adsorbierende Komponente sein, aber auch die stärker adsorbierende Komponente, die sich auf diese Weise im Produkt oder im Restgas wiederfindet.

Im Rahmen der vorliegenden Erfindung kann das dritte Gasgemisch vorgeheizt werden, bevor es in dem Spültakt verwendet wird. Auf diese Weise kann die Regeneration nochmals verstärkt werden.

Ferner ist es im Rahmen der vorliegenden Erfindung auch möglich, das vierte Gasgemisch oder den Teil hiervon, welcher der in dem Zusatztakt betriebenen Adsorptionseinheit zugeführt wird, zumindest teilweise abzukühlen. Auf diese Weise lässt sich die Adsorption in dem Zusatztakt an dem verwendeten Adsorbens aufgrund der Temperaturabsenkung verbessern.

Es ist auch möglich, das dritte Gasgemisch zumindest zeitweise und zumindest teilweise zwischenzuspeichern und es erst dann in der erläuterten Weise zu verwenden. Ein entsprechender Pufferbehälter, der für die Zwischenspeicherung des dritten Gasgemischs und damit des Restgases verwendet werden kann, kann auch im Druckwechsel betrieben werden, so dass eine erhöhte Speicherkapazität resultiert. Auf diese Weise kann ein sogenanntes "Restgasloch" durch den diskontinuierlichen Restgasanfall aufgefüllt werden.

Grundsätzlich kann im Rahmen der vorliegenden Erfindung das erste Temperaturniveau, also das Temperaturniveau der Adsorption, bei 15 bis 50 °C liegen. Das zweite Temperaturniveau kann beispielsweise bei 100 bis 300 °C liegen. Die verwendeten Betriebsdrücke richten sich insbesondere nach dem jeweiligen Einsatzgebiet. Sie liegen typischerweise zwischen 10 und 100 bar Absolutdruck.

Die vorliegende Erfindung erstreckt sich auch auf eine Temperaturwechseladsorptionsanlage, die insbesondere für einen Betrieb gemäß einem Verfahren, wie es zuvor in Ausgestaltungen erläutert wurde, eingerichtet sein kann. Zu Merkmalen einer entsprechenden Temperaturwechseladsorptionsanlage sei auf den entsprechenden unabhängigen Patentanspruch sowie die obigen Erläuterungen ausdrücklich verwiesen. Entsprechendes gilt auch für die mittels einer entsprechenden Temperaturwechseladsorptionsanlage erzielbaren Vorteile.

Die vorliegende Erfindung wird nachfolgend nochmals unter Bezugnahme auf die beigefügte Tabelle 1 erläutert, in der aufeinander folgende Betriebszeiträume und der jeweilige Betriebstakt der Adsorptionseinheiten veranschaulicht sind.

**Tabelle 1**

| **Betriebszeitraum** | **1.1** | **2.1** | **1.2** | **2.1** | **1.3** | **2.3** |
|---|---|---|---|---|---|---|
| Adsorptionseinheit 1 | A | A | Z | R | S | K |
| Adsorptionseinheit 2 | Z | R | S | K | A | A |
| Adsorptionseinheit 3 | S | K | A | A | Z | R |

In der Tabelle 1 bezeichnen die in der Kopfzeile angegebenen Betriebszeiträume 1.1, 1.2 und 1.3 dabei drei Instanzen der zuvor erläuterten ersten Betriebszeiträume, die Betriebszeiträume 2.1, 2.2 und 2.3 hingegen drei Instanzen der jeweils zuvor erläuterten zweiten Betriebszeiträume. Die verwendeten Adsorptionseinheiten sind mit 1 bis 3 durchnummeriert.

In der Tabelle 1 bezeichnen jeweils A einen Adsorptionstakt, Z einen Zusatztakt, R einen Regeneriertakt, S einen Spültakt und K einen Kühltakt. Zu weiteren Details bezüglich dieser Takte sei auf die obigen Erläuterungen sowie auf die Erläuterungen zu den Figuren 1 und 2 verwiesen, in denen die Adsorptionseinheiten und die Betriebszeiträume bzw. -takte gleiche Nummern tragen.

Die Erfindung wird nachfolgend unter Bezugnahme auf die beigefügten Zeichnungen erläutert, die Ausgestaltungen der vorliegenden Erfindung in Form schematischer Prozessdiagramme veranschaulicht.

### Kurze Beschreibung der Zeichnungen

Figur 1 veranschaulicht ein Verfahren gemäß einer Ausgestaltung der Erfindung in Form eines vereinfachten Prozessdiagramms.
Figur 2 veranschaulicht ein Verfahren gemäß einer Ausgestaltung der Erfindung in Form eines vereinfachten Prozessdiagramms.

In den Figuren sind einander entsprechende Elemente bzw. Verfahrensschritte mit identischen Bezugszeichen angegeben und werden der Übersichtlichkeit halber nicht wiederholt erläutert.

### Ausführliche Beschreibung der Zeichnungen

In Figur 1 ist ein Verfahren gemäß einer Ausgestaltung der vorliegenden Erfindung in Form eines vereinfachten Prozessdiagramms veranschaulicht. Zugleich zeigt die Figur 1 eine entsprechende Anlage, die insgesamt mit 100 bezeichnet ist.

In dem in Figur 1 veranschaulichten Verfahren bzw. der Anlage 100 sind drei Adsorptionseinheiten 1, 2, 3 vorgesehen bzw. werden entsprechend verwendet. Die Figur 1 veranschaulicht dabei eine Instanz eines ersten Betriebszeitraums (siehe auch 1.1 in Tabelle 1), wie er zuvor im Detail erläutert wurde. Die drei Adsorptionseinheiten werden dabei im dargestellten Beispiel in einem Adsorptionstakt (A, Adsorptionseinheit 1), in einem Zusatztakt (Z, Adsorptionseinheit 2) und einem Spültakt (S, Adsorptionseinheit 3) betrieben. Bei nachfolgenden ersten Betriebszeiträumen wird dabei, wie in Tabelle 1 veranschaulicht, kontinuierlich weitergeschaltet.

Der in dem Adsorptionstakt A befindlichen Adsorptionseinheit 1 wird hierbei ein erstes Gasgemisch a auf einem ersten Temperaturniveau zugeführt. Es wird ein zweites Gasgemisch b erhalten, wobei Komponenten des ersten Gasgemischs a an einem Adsorbens in der Adsorptionseinheit 1 adsorbieren. Das zweite Gasgemisch b kann zur Bereitstellung eines Produktgemischs p verwendet werden.

Die Adsorptionseinheit 2 befindet sich in dem Zusatztakt Z, die Adsorptionseinheit 3 in dem Spültakt S. In dem Spültakt S werden in einem nicht veranschaulichten Regeneriertakt (R, siehe hierzu Figur 2) zuvor desorbierte und nach dem Regeneriertakt in der Adsorptionseinheit 1 vorhandene Komponenten zumindest teilweise mittels eines dritten Gasgemischs, das hier mit c bezeichnet ist, und unter Erhalt eines vierten Gasgemischs, hier mit d bezeichnet, ausgespült. In der hier veranschaulichten Ausgestaltung der vorliegenden Erfindung wird dabei ein Teil des zweiten Gasgemischs b der in dem Spültakt S betriebenen Adsorptionseinheit 3 als Teil des dritten Gasgemischs c zugeführt.

Das vierte Gasgemisch d wird in der hier veranschaulichten Ausgestaltung der Erfindung der in dem Zusatztakt Z betriebenen Adsorptionseinheit 2 zugeführt, wobei auch hier die jeweils adsorbierbaren Komponenten adsorbieren. Es wird ein fünftes Gasgemisch e erhalten, welches im dargestellten Beispiel zumindest teilweise mit dem zweiten Gasgemisch b vereinigt wird.

Figur 2 veranschaulicht den zuvor mehrfach erwähnten und als "zweiter" Betriebszeitraum bezeichneten Betriebszeitraum in einer Instanz (siehe auch 2.1 in Tabelle 1). In diesem befindet sich die erste Adsorptionseinheit 1 im Adsorptionstakt A, die zweite Adsorptionseinheit 2 in einem Regeneriertakt R und die dritte Adsorptionseinheit 3 in einem Kühltakt K.

Der Adsorptionstakt A der ersten Adsorptionseinheit wurde bereits erläutert. In dem Regeneriertakt R der zweiten Adsorptionseinheit 2 wird diese bzw. deren Adsorbens mittels eines geeigneten Heizfluids oder elektrisch, direkt oder indirekt wie zuvor erläutert, aufgeheizt. Auf diese Weise wird ein Gasstrom f erhalten, der aus der zweiten Adsorptionseinheit 2 ausgeführt werden kann. Wird eine Durchströmung der entsprechenden Adsorptionseinheit 2 unter stofflichem Kontakt mit dem Adsorbens vorgenommen, wird hier kontinuierlich ein entsprechender Gasstrom f in einem vergleichsweise großen Volumen ausgeführt, bei indirekter Erwärmung wird lediglich ein Druckanstieg ausgeglichen, der sich aus der Temperaturexpansion und dem Freiwerden von Gas bei der Desorption ergibt.

In die dritte Adsorptionseinheit 3 wird ein Teil des zweiten Gasgemischs b, hier mit g bezeichnet, eingeleitet, so dass auf diese Weise, wie erwähnt, ein Druck in dieser Adsorptionseinheit 3 aufrechterhalten werden kann.

## Patentansprüche

1. Verfahren zum Betreiben einer Temperaturwechseladsorptionsanlage (100) mit drei Adsorptionseinheiten (1, 2, 3), die in zeitlichem Versatz zueinander jeweils in einem Adsorptionstakt, danach in einem Zusatztakt, danach in einem Regeneriertakt, danach in einem Spültakt und danach in einem Abkühltakt betrieben werden, wobei
- in dem Adsorptionstakt ein erstes Gasgemisch auf einem ersten Temperaturniveau unter Erhalt eines zweiten Gasgemischs über ein Adsorbens in den Adsorptionseinheiten (1, 2, 3) geführt und Komponenten des ersten Gasgemischs von dem Adsorbens adsorbiert werden,
- in dem Regeneriertakt die Adsorptionseinheiten (1, 2, 3) auf ein zweites Temperaturniveau oberhalb des ersten Temperaturniveaus erwärmt und die in dem Adsorptionstakt an das Adsorbens adsorbierten Komponenten teilweise oder vollständig desorbiert werden,
- in dem Spültakt die in dem Regeneriertakt desorbierten und nach dem Regeneriertakt in den Adsorptionseinheiten (1, 2, 3) vorhandenen Komponenten teilweise oder vollständig mittels eines dritten Gasgemischs unter Erhalt eines vierten Gasgemischs ausgespült werden, und
- die Adsorptionseinheiten (1, 2, 3) in dem Kühltakt zumindest teilweise auf das erste Temperaturniveau abgekühlt werden,
**dadurch gekennzeichnet, dass**
- in wiederholten ersten Betriebszeiträumen, die mit zweiten Betriebszeiträumen alternieren, jeweils zeitgleich eine der Adsorptionseinheiten (1, 2, 3) in dem Adsorptionstakt, eine der Adsorptionseinheiten (1, 2, 3) in dem Spültakt und eine der Adsorptionseinheiten (1, 2, 3) in dem Zusatztakt betrieben wird, und
- während der ersten Betriebszeiträume ein Teil des zweiten Gasgemischs der in dem Spültakt betriebenen Adsorptionseinheit (3) als das dritte Gasgemisch oder als ein Teil des dritten Gasgemischs zugeführt wird und das vierte Gasgemisch oder ein Teil des vierten Gasgemischs der in dem Zusatztakt betriebenen Adsorptionseinheit (1, 2, 3) zugeführt wird.

2. Verfahren nach Anspruch 1, bei dem in den in dem Zusatztakt betriebenen Adsorptionseinheiten (1, 2, 3) das vierte Gasgemisch teilweise oder vollständig auf dem ersten Temperaturniveau über ein Adsorbens in den Adsorptionseinheiten (1, 2, 3) geführt wird, wobei Komponenten des vierten Gasgemischs von dem Adsorbens adsorbiert werden und ein dabei erhaltenes fünftes Gasgemisch teilweise oder vollständig dem zweiten Gasgemisch zugespeist wird.

3. Verfahren nach Anspruch 1 oder 2, bei dem während der zweiten Betriebszeiträume jeweils zeitgleich eine der Adsorptionseinheiten (1, 2, 3) in dem Adsorptionstakt, eine der Adsorptionseinheiten (1, 2, 3) in dem Regeneriertakt und eine der Adsorptionseinheiten (1, 2, 3) in dem Abkühltakt betrieben wird.

4. Verfahren nach Anspruch 3, bei dem der in den zweiten Betriebszeiträumen in dem Abkühltakt betriebenen Adsorptionseinheit (3) jeweils das zweite Gasgemisch teilweise oder vollständig zugeführt wird.

5. Verfahren nach einem der vorstehenden Ansprüche, bei dem in den ersten Betriebszeiträumen jeweils
- jene Adsorptionseinheit (1) in dem Adsorptionstakt betrieben wird, die in einem zeitlich vorangehenden ersten Betriebszeitraum in dem Spültakt betrieben wurde,
- jene Adsorptionseinheit (2) in dem Zusatztakt betrieben wird, die in dem zeitlich vorangehenden ersten Betriebszeitraum in dem Adsorptionstakt betrieben wurde, und
- jene Adsorptionseinheit (3) in dem Spültakt betrieben wird, die in dem zeitlich vorangehenden ersten Betriebszeitraum in dem Zusatztakt betrieben wurde.

6. Verfahren nach einem der Ansprüche 3 bis 5, bei dem in den zweiten Betriebszeiträumen jeweils
- jene Adsorptionseinheit (1) in dem Adsorptionstakt betrieben wird, die in einem zeitlich vorangehenden zweiten Betriebszeitraum in dem Abkühltakt betrieben wurde,
- jene Adsorptionseinheit (2) in dem Regeneriertakt betrieben wird, die in dem zeitlich vorangehenden ersten Betriebszeitraum in dem Adsorptionstakt betrieben wurde, und
- jene Adsorptionseinheit (3) in dem Abkühltakt betrieben wird, die in dem zeitlich vorangehenden ersten Betriebszeitraum in dem Regeneriertakt betrieben wurde.

7. Verfahren nach einem der vorstehenden Ansprüche, bei dem durch die in dem Regeneriertakt betriebene Adsorptionseinheit (1-3) ein Fluid geführt wird, das mit dem Adsorbens in der Adsorptionseinheit (1-3) in stofflichen Kontakt kommt.

8. Verfahren nach einem der vorstehenden Ansprüche, bei dem durch die in dem Regeneriertakt betriebene Adsorptionseinheit (1-3) ein Heizfluid geführt wird, das von dem Adsorbens in der Adsorptionseinheit (1-3) durch eine stoffundurchlässige Barriere getrennt ist und/oder bei dem die in dem Regeneriertakt betriebene Adsorptionseinheit (1-3) elektrisch beheizt wird.

9. Verfahren nach einem der vorstehenden Ansprüche, bei dem der Regeneriertakt unterteilt wird und ein aus der in dem Regeneriertakt betriebenen Adsorptionseinheit (1-3) entnommenes Gasgemisch teilweise der in dem Zusatztakt betriebenen Adsorptionseinheit (1-3) zugeführt wird.

10. Verfahren nach einem der vorstehenden Ansprüche, bei dem das zweite Gasgemisch der Anlage (100) als Produktgasgemisch entnommen wird, oder bei dem die in dem Regeneriertakt zumindest teilweise desorbierten Komponenten in ein Produktgasgemisch überführt werden.

11. Verfahren nach einem der vorstehenden Ansprüche, bei dem das dritte Gasgemisch vorgeheizt wird, bevor es in dem Spültakt verwendet wird.

12. Verfahren nach einem der vorstehenden Ansprüche, bei dem das vierte Gasgemisch oder der Teil hiervon, welcher der in dem Zusatztakt betriebenen Adsorptionseinheit (1, 2, 3) zugeführt wird, abgekühlt wird.

13. Verfahren nach einem der vorstehenden Ansprüche, bei dem das vierte Gasgemisch teilweise oder vollständig zwischengespeichert wird.

14. Verfahren nach einem der vorstehenden Ansprüche, bei dem das erste Temperaturniveau bei 15 bis 50 °C liegt und bei dem das zweite Temperaturniveau bei 100 bis 300 °C liegt, wobei das Verfahren insbesondere auf einem Druckniveau von 10 bis 100 bar durchgeführt wird.

15. Temperaturwechseladsorptionsanlage (100) mit drei Adsorptionseinheiten (1, 2, 3), die dafür eingerichtet ist, die Adsorptionseinheiten (1, 2, 3) in zeitlichem Versatz zueinander jeweils in einem Adsorptionstakt, danach in einem Zusatztakt, danach in einem Regeneriertakt, danach in einem Spültakt und danach in einem Abkühltakt zu betreiben, wobei die Temperaturwechseladsorptionsanlage (100) ferner dafür eingerichtet ist,
- in dem Adsorptionstakt ein erstes Gasgemisch auf einem ersten Temperaturniveau unter Erhalt eines zweiten Gasgemischs über ein Adsorbens in den Adsorptionseinheiten (1, 2, 3) zu führen und Komponenten des ersten Gasgemischs von dem Adsorbens zu adsorbieren,
- in dem Regeneriertakt die Adsorptionseinheiten (1, 2, 3) auf ein zweites Temperaturniveau oberhalb des ersten Temperaturniveaus zu erwärmen und die in dem Adsorptionsmodus von dem Adsorbens adsorbierten Komponenten teilweise oder vollständig zu desorbieren,
- in dem Spültakt die in dem Regeneriermodus desorbierten und nach dem Regeneriertakt in den Adsorptionseinheiten (1, 2, 3) vorhandenen Komponenten teilweise oder vollständig mittels eines dritten Gasgemischs unter Erhalt eines vierten Gasgemischs auszuspülen, und
- die Adsorptionseinheiten (1, 2, 3) in dem Abkühltakt zumindest teilweise auf das erste Temperaturniveau abzukühlen,
**gekennzeichnet durch** Mittel, die dafür eingerichtet sind,
- in wiederholten ersten Betriebszeiträumen, die mit zweiten Betriebszeiträumen alternieren, jeweils zeitgleich eine der Adsorptionseinheiten (1, 2, 3) in dem Adsorptionstakt, eine der Adsorptionseinheiten (1, 2, 3) in dem Spültakt und eine der Adsorptionseinheiten (1, 2, 3) in dem Zusatztakt zu betreiben, und
- während der ersten Betriebszeiträume ein Teil des zweiten Gasgemischs der in dem Spültakt betriebenen Adsorptionseinheit (3) als das dritte Gasgemisch oder als ein Teil des dritten Gasgemischs zuzuführen und das vierte Gasgemisch teilweise oder vollständig der in dem Zusatztakt betriebenen Adsorptionseinheit (1, 2, 3) zuzuführen.

## Claims

1. Method for operating a temperature swing adsorption plant (100) comprising three adsorption units (1, 2, 3), which are operated out of phase with respect to one another, in each case in an adsorption phase, then in a feed phase, then in a regeneration phase, then in a flush phase, and then in a cooling phase, wherein
- in the adsorption phase, a first gas mixture at a first temperature level is guided over an adsorbent in the adsorption units (1, 2, 3) to obtain a second gas mixture, and components of the first gas mixture are adsorbed by the adsorbent,
- in the regeneration phase, the adsorption units (1, 2, 3) are heated to a second temperature level above the first temperature level, and the components adsorbed onto the adsorbent in the adsorption phase are desorbed in part or completely,
- in the flush phase, the components desorbed in the regeneration phase and present in the adsorption units (1, 2, 3) after the regeneration phase are flushed out in part or completely by means of a third gas mixture to obtain a fourth gas mixture, and
- in the cooling phase, the adsorption units (1, 2, 3) are cooled at least in part to the first temperature level,
**characterized in that**
- in repeated first operating periods, which alternate with second operating periods, in each case simultaneously one of the adsorption units (1, 2, 3) is operated in the adsorption phase, one of the adsorption units (1, 2, 3) is operated in the flush phase, and one of the adsorption units (1, 2, 3) is operated in the feed phase, and
- during the first operating periods, a portion of the second gas mixture is supplied to the adsorption unit (3) operated in the flush phase as the third gas mixture or as a portion of the third gas mixture, and the fourth gas mixture or a portion of the fourth gas mixture is supplied to the adsorption unit (1, 2, 3) operated in the feed phase.

2. Method according to claim 1, in which, in the adsorption units (1, 2, 3) operated in the feed phase, the fourth gas mixture is guided in part or completely at the first temperature level over an adsorbent in the adsorption units (1, 2, 3), wherein components of the fourth gas mixture are adsorbed by the adsorbent, and a fifth gas mixture obtained thereby is fed in part or completely to the second gas mixture.

3. Method according to claim 1 or 2, wherein, during the second operating periods, in each case simultaneously one of the adsorption units (1, 2, 3) is operated in the adsorption phase, one of the adsorption units (1, 2, 3) is operated in the regeneration phase, and one of the adsorption units (1, 2, 3) is operated in the cooling phase.

4. Method according to claim 3, wherein, in each case, the second gas mixture is supplied in part or completely to the adsorption unit (3) operated in the cooling phase in the second operating periods.

5. Method according to any of the preceding claims, wherein, in the first operating periods, in each case
- the adsorption unit (1) that was operated in the flush phase in an earlier first operating period is operated in the adsorption phase,
- the adsorption unit (2) that was operated in the adsorption phase in the earlier first operating period is operated in the feed phase, and
- the adsorption unit (3) that was operated in the feed phase in the earlier first operating period is operated in the flush phase.

6. Method according to any of claims 3 to 5, wherein, in the second operating periods, in each case
- the adsorption unit (1) that was operated in the cooling phase in an earlier second operating period is operated in the adsorption phase,
- the adsorption unit (2) that was operated in the adsorption phase in the earlier first operating period is operated in the regeneration phase, and
- the adsorption unit (3) that was operated in the regeneration phase in the earlier first operating period is operated in the cooling phase.

7. Method according to any of the preceding claims, wherein a fluid is guided through the adsorption unit (1-3) operated in the regeneration phase and comes into material contact with the adsorbent in the adsorption unit (1-3).

8. Method according to any of the preceding claims, wherein a heating fluid is guided through the adsorption unit (1-3) operated in the regeneration phase and is separated from the adsorbent in the adsorption unit (1-3) by a materially impermeable barrier, and/or wherein the adsorption unit (1-3) operated in the regeneration phase is electrically heated.

9. Method according to any of the preceding claims, wherein the regeneration phase is divided and a gas mixture removed from the adsorption unit (1-3) operated in the regeneration phase is supplied in part to the adsorption unit (1-3) operated in the feed phase.

10. Method according to any of the preceding claims, wherein the second gas mixture is removed from the plant (100) as a product gas mixture, or wherein the components desorbed at least in part in the regeneration phase are transferred into a product gas mixture.

11. Method according to any of the preceding claims, wherein the third gas mixture is preheated before it is used in the flush phase.

12. Method according to any of the preceding claims, wherein the fourth gas mixture, or the portion thereof that is supplied to the adsorption unit (1, 2, 3) operated in the feed phase, is cooled.

13. Method according to any of the preceding claims, wherein the fourth gas mixture is stored temporarily in part or completely.

14. Method according to any of the preceding claims, in which the first temperature level is 15 to 50°C, and in which the second temperature level is 100 to 300°C, wherein the method is carried out in particular at a pressure level of 10 to 100 bar.

15. Temperature swing adsorption plant (100) comprising three adsorption units (1, 2, 3), which is designed to operate the adsorption units (1, 2, 3) out of phase with respect to one another, in each case in an adsorption phase, then in a feed phase, then in a regeneration phase, then in a flush phase, and then in a cooling phase, wherein the temperature swing adsorption plant (100) is also designed
- in the adsorption phase, to guide a first gas mixture at a first temperature level over an adsorbent in the adsorption units (1, 2, 3) to obtain a second gas mixture, and to adsorb components of the first gas mixture by the adsorbent,
- in the regeneration phase, to heat the adsorption units (1, 2, 3) to a second temperature level above the first temperature level, and to desorb in part or completely the components adsorbed by the adsorbent in the adsorption mode,
- in the flush phase, to flush in part or completely the components desorbed in the regeneration mode and present in the adsorption units (1, 2, 3) after the regeneration phase by means of a third gas mixture to obtain a fourth gas mixture, and
- in the cooling phase, to cool at least in part the adsorption units (1, 2, 3) to the first temperature level,
**characterized by** means that are designed
- in repeated first operating periods, which alternate with second operating periods, in each case simultaneously to operate one of the adsorption units (1, 2, 3) in the adsorption phase, one of the adsorption units (1, 2, 3) in the flush phase, and one of the adsorption units (1, 2, 3) in the feed phase, and
- during the first operating periods, to supply a portion of the second gas mixture to the adsorption unit (3) operated in the flush phase as the third gas mixture or as a portion of the third gas mixture, and to supply the fourth gas mixture in part or completely to the adsorption unit (1, 2, 3) operated in the feed phase.

## Revendications

1. Procédé permettant de faire fonctionner une installation (100) d'adsorption à température modulée comportant trois unités d'adsorption (1, 2, 3) qui fonctionnent, avec un décalage temporel les unes par rapport aux autres, respectivement dans un cycle d'adsorption, puis dans un cycle supplémentaire, puis dans un cycle de régénération, puis dans un cycle de rinçage et puis dans un cycle de refroidissement, dans lequel
- dans le cycle d'adsorption, un premier mélange gazeux est guidé à un premier niveau de température sur un adsorbant dans les unités d'adsorption (1, 2, 3) pour obtenir un deuxième mélange gazeux et des composants du premier mélange gazeux sont adsorbés par l'adsorbant,
- dans le cycle de régénération, les unités d'adsorption (1, 2, 3) sont chauffées à un second niveau de température supérieur au premier niveau de température et les composants adsorbés par l'adsorbant dans le cycle d'adsorption sont partiellement ou entièrement désorbés,
- dans le cycle de rinçage, les composants désorbés dans le cycle de régénération et présents dans les unités d'adsorption (1, 2, 3) après le cycle de régénération sont partiellement ou entièrement rincés au moyen d'un troisième mélange gazeux pour obtenir un quatrième mélange gazeux, et
- les unités d'adsorption (1, 2, 3) sont refroidies au moins partiellement jusqu'au premier niveau de température dans le cycle de refroidissement,
**caractérisé en ce que**
- au cours de premières périodes de fonctionnement répétées, lesquelles alternent avec des secondes périodes de fonctionnement, on fait fonctionner respectivement simultanément l'une des unités d'adsorption (1, 2, 3) dans le cycle d'adsorption, l'une des unités d'adsorption (1, 2, 3) dans le cycle de rinçage et l'une des unités d'adsorption (1, 2, 3) dans le cycle supplémentaire, et
- pendant les premières périodes de fonctionnement, une partie du deuxième mélange gazeux est acheminée à l'unité d'adsorption (3) fonctionnant dans le cycle de rinçage en tant que troisième mélange gazeux ou en tant que partie du troisième mélange gazeux, et le quatrième mélange gazeux ou une partie du quatrième mélange gazeux est acheminé à l'unité d'adsorption (1, 2, 3) fonctionnant dans le cycle supplémentaire.

2. Procédé selon la revendication 1, dans lequel, dans les unités d'adsorption (1, 2, 3) fonctionnant dans le cycle supplémentaire, le quatrième mélange gazeux est guidé partiellement ou entièrement au premier niveau de température sur un adsorbant dans les unités d'adsorption (1, 2, 3), dans lequel des composants du quatrième mélange gazeux sont adsorbés par l'adsorbant et un cinquième mélange gazeux ainsi obtenu est introduit partiellement ou entièrement dans le deuxième mélange gazeux.

3. Procédé selon la revendication 1 ou 2, dans lequel, pendant les secondes périodes de fonctionnement, on fait fonctionner respectivement simultanément l'une des unités d'adsorption (1, 2, 3) dans le cycle d'adsorption, l'une des unités d'adsorption (1, 2, 3) dans le cycle de régénération et l'une des unités d'adsorption (1, 2, 3) dans le cycle de refroidissement.

4. Procédé selon la revendication 3, dans lequel respectivement le deuxième mélange gazeux est acheminé partiellement ou entièrement à l'unité d'adsorption (3) fonctionnant dans le cycle de refroidissement au cours des secondes périodes de fonctionnement.

5. Procédé selon l'une des revendications précédentes, dans lequel, au cours des premières périodes de fonctionnement, respectivement
- l'unité d'adsorption (1) qui fonctionnait dans le cycle de rinçage au cours d'une première période de fonctionnement précédant dans le temps fonctionne dans le cycle d'adsorption,
- l'unité d'adsorption (2) qui fonctionnait dans le cycle d'adsorption au cours de la première période de fonctionnement précédant dans le temps fonctionne dans le cycle supplémentaire, et
- l'unité d'adsorption (3) qui fonctionnait dans le cycle supplémentaire au cours de la première période de fonctionnement précédant dans le temps fonctionne dans le cycle de rinçage.

6. Procédé selon l'une des revendications 3 à 5, dans lequel, au cours des secondes périodes de fonctionnement, respectivement
- l'unité d'adsorption (1) qui fonctionnait dans le cycle de refroidissement au cours d'une seconde période de fonctionnement précédant dans le temps fonctionne dans le cycle d'adsorption,
- l'unité d'adsorption (2) qui fonctionnait dans le cycle d'adsorption au cours de la première période de fonctionnement précédant dans le temps fonctionne dans le cycle de régénération, et
- l'unité d'adsorption (3) qui fonctionnait dans le cycle de régénération au cours de la première période de fonctionnement précédant dans le temps fonctionne dans le cycle de refroidissement.

7. Procédé selon l'une des revendications précédentes, dans lequel un fluide est guidé à travers l'unité d'adsorption (1-3) fonctionnant dans le cycle de régénération, lequel fluide vient en contact matériel avec l'adsorbant dans l'unité d'adsorption (1-3).

8. Procédé selon l'une des revendications précédentes, dans lequel un fluide de chauffage est guidé à travers l'unité d'adsorption (1-3) fonctionnant dans le cycle de régénération, lequel fluide de chauffage est séparé de l'adsorbant dans l'unité d'adsorption (1-3) par une barrière imperméable à la matière et/ou dans lequel l'unité d'adsorption (1-3) fonctionnant dans le cycle de régénération est chauffée électriquement.

9. Procédé selon l'une des revendications précédentes, dans lequel le cycle de régénération est divisé et un mélange gazeux prélevé de l'unité d'adsorption (1-3) fonctionnant dans le cycle de régénération est acheminé partiellement à l'unité d'adsorption (1-3) fonctionnant dans le cycle supplémentaire.

10. Procédé selon l'une des revendications précédentes, dans lequel le deuxième mélange gazeux est prélevé de l'installation (100) en tant que mélange gazeux de produits, ou dans lequel les composants désorbés au moins partiellement dans le cycle de régénération sont transférés dans un mélange gazeux de produits.

11. Procédé selon l'une des revendications précédentes, dans lequel le troisième mélange gazeux est préchauffé avant d'être utilisé dans le cycle de rinçage.

12. Procédé selon l'une des revendications précédentes, dans lequel le quatrième mélange gazeux, ou la partie de celui-ci qui est acheminée à l'unité d'adsorption (1, 2, 3) fonctionnant dans le cycle supplémentaire, est refroidi.

13. Procédé selon l'une des revendications précédentes, dans lequel le quatrième mélange gazeux est partiellement ou entièrement stocké temporairement.

14. Procédé selon l'une des revendications précédentes, dans lequel le premier niveau de température va de 15 à 50 °C et dans lequel le second niveau de température va de 100 à 300 °C, dans lequel le procédé est en particulier mis en oeuvre à un niveau de pression allant de 10 à 100 bar.

15. Installation (100) d'adsorption à température modulée comportant trois unités d'adsorption (1, 2, 3), laquelle est conçue pour faire fonctionner les unités d'adsorption (1, 2, 3), avec un décalage temporel les unes par rapport aux autres, respectivement dans un cycle d'adsorption, puis dans un cycle supplémentaire, puis dans un cycle de régénération, puis dans un cycle de rinçage et puis dans un cycle de refroidissement, dans lequel l'installation (100) d'adsorption à température modulée est en outre conçue pour
- dans le cycle d'adsorption, guider un premier mélange gazeux à un premier niveau de température sur un adsorbant dans les unités d'adsorption (1, 2, 3) pour obtenir un deuxième mélange gazeux et adsorber des composants du premier mélange gazeux par l'adsorbant,
- dans le cycle de régénération, chauffer les unités d'adsorption (1, 2, 3) à un second niveau de température supérieur au premier niveau de température et désorber partiellement ou entièrement les composants adsorbés par l'adsorbant dans le mode d'adsorption,
- dans le cycle de rinçage, rincer partiellement ou entièrement les composants désorbés dans le mode de régénération et présents dans les unités d'adsorption (1, 2, 3) après le cycle de régénération au moyen d'un troisième mélange gazeux pour obtenir un quatrième mélange gazeux, et
- refroidir les unités d'adsorption (1, 2, 3) au moins partiellement jusqu'au premier niveau de température dans le cycle de refroidissement,
**caractérisé par** des moyens qui sont conçus pour
- au cours de premières périodes de fonctionnement répétées, lesquelles alternent avec des secondes périodes de fonctionnement, faire fonctionner respectivement simultanément l'une des unités d'adsorption (1, 2, 3) dans le cycle d'adsorption, l'une des unités d'adsorption (1, 2, 3) dans le cycle de rinçage et l'une des unités d'adsorption (1, 2, 3) dans le cycle supplémentaire, et
- pendant les premières périodes de fonctionnement, acheminer une partie du deuxième mélange gazeux à l'unité d'adsorption (3) fonctionnant dans le cycle de rinçage en tant que troisième mélange gazeux ou en tant que partie du troisième mélange gazeux et acheminer le quatrième mélange gazeux partiellement ou entièrement à l'unité d'adsorption (1, 2, 3) fonctionnant dans le cycle supplémentaire.
